# EUROPEAN PATENT APPLICATION

(11) **EP 4 700 929 A1**
(43) Date of publication of application: **25.02.2026**
(21) Application number: 24934274.2
(22) Date of filing: 13.11.2024
(51) Int. Cl.: H01M 50/143, H01M 50/593, H01M 50/30, H01M 50/271, H01M 50/183, H01M 50/249

(54) **BATTERY MODULE, BATTERY PACK COMPRISING SAME, AND VEHICLE**

(30) Priority: 01.04.2024 KR 20240044066
(71) Applicant: LG Energy Solution, Ltd., Seoul 07335 (KR)
(72) Inventor: YUN, Hyun-Seop, Daejeon 34122 (KR); JUNG, Hye-Mi, Daejeon 34122 (KR)
(74) Representative: Plasseraud IP
(86) International application number: PCT/KR2024/096554
(87) International publication number: WO 2025/211541

(57) **Abstract**

Disclosed is a battery module, and a battery pack and a vehicle including the same. The battery module includes a battery cell stack in which a plurality of battery cells having electrode leads are stacked; a module case in which the battery cell stack is accommodated; and a refractory insulating member configured to surround the battery cell.

## Description

### TECHNICAL FIELD

This application is based on and claims priority from Korean Patent Application No. 10-2024-0044066, filed on April 1, 2024, with the Korean Intellectual Property Office, the disclosure of which is incorporated herein in its entirety by reference.

The present disclosure relates to a battery module, and a battery pack and a vehicle including the same, and more specifically, to a battery module capable of preventing propagation of flame, gas or high-temperature particles, and a battery pack and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

When a thermal event occurs in any battery cell within a battery module, flame, gas, or high-temperature particles are propagated to other battery cells located nearby.

If flame, gas, or high-temperature particles are propagated to another battery cell or another battery module, a thermal runaway phenomenon may occur, and if the flame leaks to the outside due to the thermal runaway phenomenon, there is a problem that the driver of the electric vehicle may be burned or put in a dangerous situation.

Alternatively, there is a problem in that the battery module or battery pack is damaged or burned down by a chain reaction of flames caused by flame propagation, so it may be impossible to secure the stability of the battery module or battery pack.

### DISCLOSURE

### Technical Problem

The present disclosure is directed to providing a battery module capable of preventing flame, gas or high-temperature particles generated in one battery cell from being propagated to another neighboring battery cell or another battery module, and a battery pack and a vehicle including the same.

In addition, the present disclosure is directed to providing a battery module capable of emitting flame, gas or high-temperature particles in a preset direction, and a battery pack and a vehicle including the same.

In addition, the present disclosure is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a battery cell stack in which a plurality of battery cells having electrode leads are stacked; a module case in which the battery cell stack is accommodated; and a refractory insulating member configured to surround the battery cell.

In an embodiment, the refractory insulating member may be made of a refractory film.

In an embodiment, the refractory insulating member may surround an upper side of the battery cell.

In an embodiment, a refractory coating layer may be formed on the refractory insulating member.

In an embodiment, the refractory insulating member may be made of a material containing silicone or aramid.

In an embodiment, the module case may include an upper module case, and the upper module case may have a first venting hole formed therein to discharge flame, gas or high-temperature particles.

In an embodiment, the refractory insulating member may include a refractory coating application portion on which a refractory coating layer is formed; and a refractory coating non-application portion on which the refractory coating layer is not applied.

In an embodiment, the refractory coating non-application portion may be formed to correspond to the first venting hole.

In an embodiment, the refractory coating non-application portion may be formed to communicate with the first venting hole.

In an embodiment, the upper module case may be coupled to a flexible mica cover in which a second venting hole is formed.

In an embodiment, the battery cell may have a terrace portion in which the electrode leads are located, and the battery module may comprise a gas inflow prevention member that is coupled to the terrace portion to prevent gas outside the battery cell from flowing into the battery cell.

In an embodiment, the gas inflow prevention member may have a curved portion formed in a curved surface shape to guide gas so that the gas flows upward.

In an embodiment, the gas inflow prevention member may be made of silicone (Si) or polyurethane (PU).

Meanwhile, according to another aspect of the present disclosure, there may be provided a battery pack including at least one battery module described above, and a vehicle including at least one battery module described above.

### Advantageous Effects

The embodiments of the present disclosure have the effect of preventing flame, gas or high-temperature particles generated in one battery cell from being propagated to another neighboring battery cell or another battery module.

In addition, the present disclosure has the effect of being able to discharge flame, gas or high-temperature particles in a preset direction.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic overall perspective view showing a battery module according to an embodiment of the present disclosure.
FIG. 2 is an exploded perspective view showing the battery module of FIG. 1.
FIG. 3 is a perspective view showing a battery cell included in the battery module according to an embodiment of the present disclosure, in which a refractory insulating member is separated from the battery cell.
FIG. 4 is a partially omitted front view showing the battery cell included in the battery module according to an embodiment of the present disclosure.
FIG. 5 is a drawing taken along line A of FIG. 4.
FIG. 6 is a drawing taken along line B of FIG. 4.
FIG. 7 is a drawing illustrating a modified embodiment of the battery module according to an embodiment of the present disclosure.
FIG. 8 is a drawing illustrating a modified embodiment of the battery module according to an embodiment of the present disclosure.
FIG. 9 is a drawing illustrating another modified embodiment of a battery module according to an embodiment of the present disclosure.
FIG. 10 is a drawing schematically showing the configuration of a battery pack including the battery module according to each embodiment of the present disclosure.
FIG. 11 is a drawing for explaining a vehicle including the battery pack of FIG. 10.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

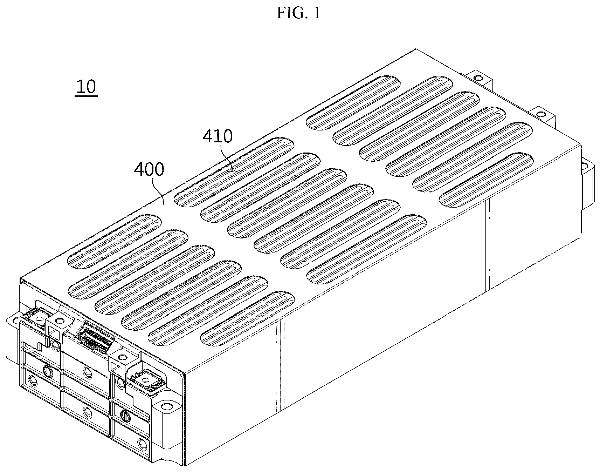

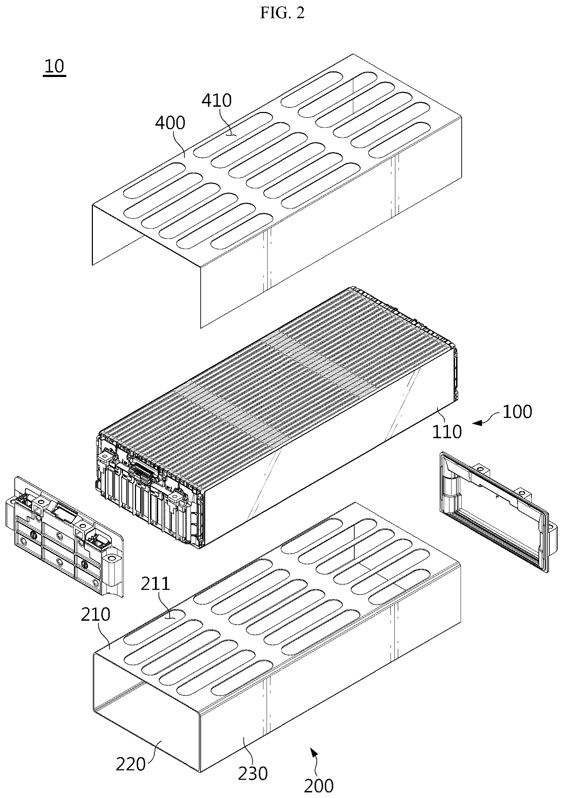

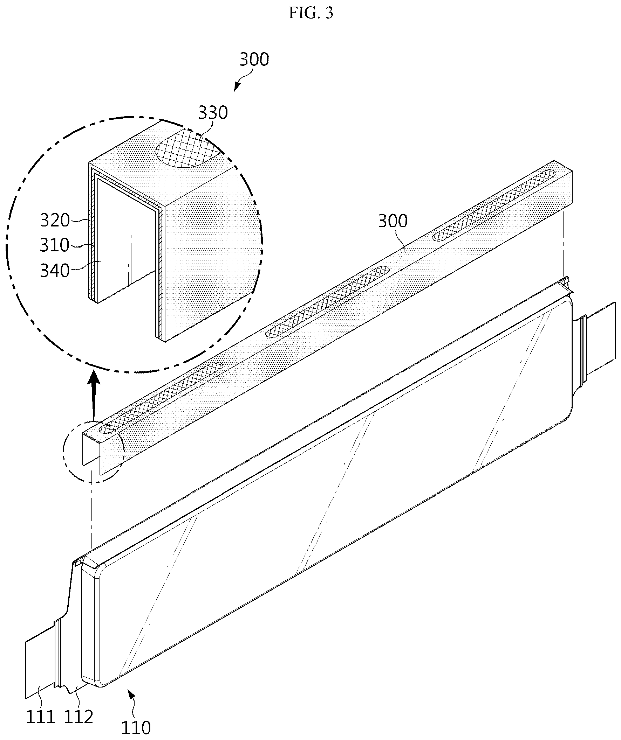

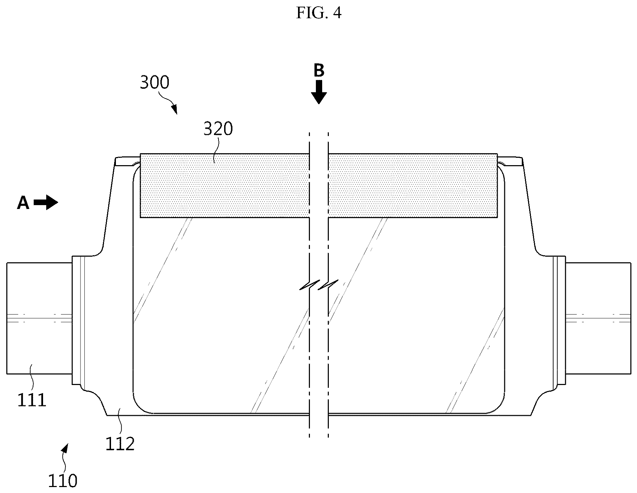

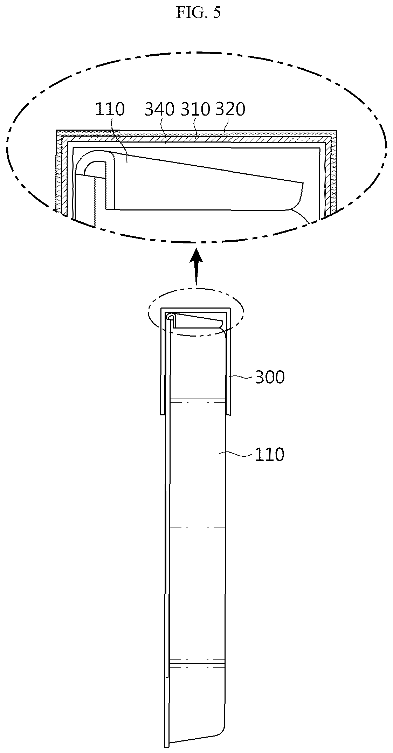

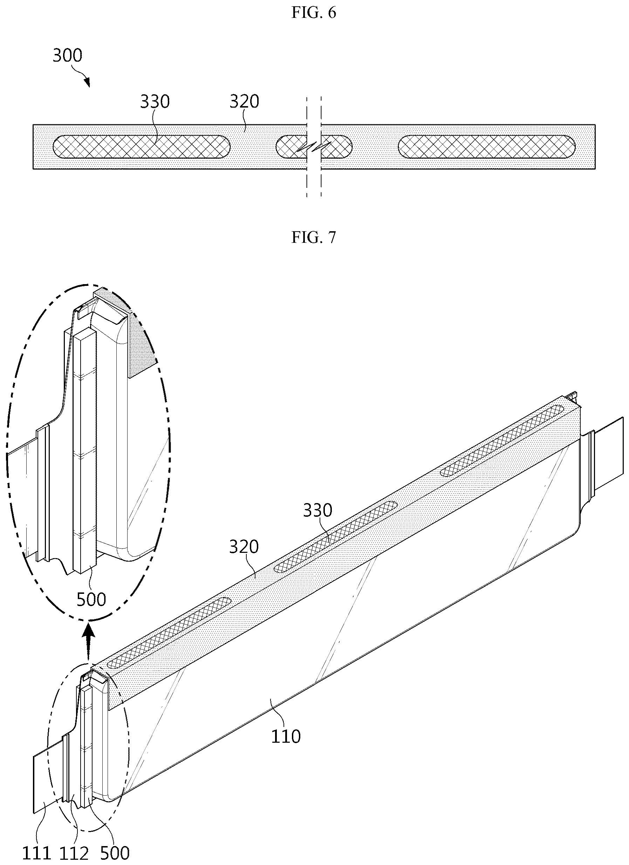

FIG. 1 is a schematic overall perspective view showing a battery module according to an embodiment of the present disclosure, FIG. 2 is an exploded perspective view showing the battery module of FIG. 1, FIG. 3 is a perspective view showing a battery cell included in the battery module according to an embodiment of the present disclosure, in which a refractory insulating member is separated from the battery cell, FIG. 4 is a partially omitted front view showing the battery cell included in the battery module according to an embodiment of the present disclosure, FIG. 5 is a drawing taken along line A of FIG. 4, and FIG. 6 is a drawing taken along line B of FIG. 4.

Referring to FIGS. 1 to 3, a battery module 10 according to an embodiment of the present disclosure includes a battery cell stack 100, a module case 200, and a refractory insulating member 300.

The battery cell stack 100 may be configured to stack a plurality of battery cells 110. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead 111 (see FIG. 3). The electrode lead 111 is a type of terminal that is exposed to the outside and connected to an external device, and a conductive material may be used. The electrode lead 111 may include a positive electrode lead and a negative electrode lead.

A plurality of battery cells 110 may be electrically connected via a bus bar coupled to the electrode lead 111.

The battery cell stack 100 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

Referring to FIG. 2, the battery cell stack 100 is accommodated in a module case 200. In addition, the module case 200 may include an upper module case 210, a lower module case 220, and a side module case 230. Here, a first venting hole 211 through which a flame, gas, or high-temperature particles may be discharged may be formed in the upper module case 210.

The module case 200 may include a mica cover 400 made of a mica material that has both thermal insulation and heat resistance to prevent flame leakage. Here, the mica cover 400 may be coupled to, for example, the upper module case 210.

A second venting hole 410 may be formed in the mica cover 400. Here, the second venting hole 410 of the mica cover 400 may be communicated with the first venting hole 211 of the upper module case 210. That is, flame, gas, or high-temperature particles generated from the battery cell 110 may be discharged to the outside of the module case 200 through the first venting hole 211 of the upper module case 210 and the second venting hole 410 of the mica cover 400.

As explained later, in the battery module 10 according to an embodiment of the present disclosure, the refractory insulating member 300 is coupled to the battery cell 110 itself, so a flame retardant material is unnecessary for components other than the mica cover 400.

Therefore, the process of coupling a component made of a flame retardant material to the mica cover 400 is unnecessary, and the work is completed by simply directly coupling the mica cover 400 to the upper module case 210, thereby improving the overall workability.

Meanwhile, the mica cover 400 may be configured in various ways. For example, the mica cover 400 may be configured flexibly. That is, the flexibly formed mica cover 400 may be coupled to the upper module case 210. Thereby, the present disclosure may have a favorable effect on bending.

The module case 200 may be formed in a shape corresponding to the shape of the battery cell stack 100. For example, if the battery cell stack 100 is formed in a hexahedral shape with a rectangular cross-section, the module case 200 may also be formed in a hexahedral shape corresponding thereto.

The module case 200 may be formed by, for example, bending a metal plate, whereby the module case 200 may be manufactured in an integral form. If the module case 200 is manufactured in an integral form, the coupling process may become easy and simple. Alternatively, the module case 200 may be provided in a separate form and coupled by welding, etc. However, the material of the module case 200 is not limited to a metal material.

If the module case 200 is formed integrally or coupled by welding, an adhesive is unnecessary. Thus, even if the temperature rises inside the battery module 10, the upper module case 210 does not separate from the side module case 230, thereby preventing flame, gas, or high-temperature particles from being emitted all at once in an undesirable direction.

The module case 200 surrounds the battery cells 110 and thus may protect the battery cells 110 from external vibration or shock.

Referring to FIGS. 3 and 4 together, the refractory insulating member 300 is configured to surround the battery cell 110. The refractory insulating member 300 may surround the battery cell 110 at various locations of the battery cell 110. For example, the refractory insulating member 300 may be configured to surround the upper side of the battery cell 110.

The refractory insulating member 300 may be made of a refractory film 310. The refractory film 310 is coupled to the upper side of the battery cell 110 and thus may protect the battery cell 110 from a flame. The battery cell stack 100 is configured so that a plurality of battery cells 110 are stacked, and the refractory film 310 may be coupled to each individual battery cell 110.

The refractory insulating member 300 may be made of a material having excellent refractory resistance such as silicone or aramid. However, the material of the refractory insulating member 300 is not limited thereto, and various materials having the necessary refractory resistance may be used.

The refractory insulating member 300 may be coupled to the battery cell 110 in various ways. For example, the refractory insulating member 300 may be coupled by bonding, or the refractory insulating member 300 may be coupled by a taping method using a taping portion 340 (see FIG. 3). Also, various other methods may be applied.

Referring to FIGS. 3 and 5, a refractory coating layer may be formed on the refractory insulating member 300. Also, referring to FIG. 6, the refractory insulating member 300 may include a refractory coating application portion 320 and a refractory coating non-application portion 330.

The refractory coating application portion 320 is a region where the refractory coating layer is formed. The refractory coating layer is composed of a layer coated with various materials that may withstand flame.

In addition, the refractory coating non-application portion 330 is a region to which the refractory coating layer is not applied. If the refractory coating non-application portion 330 is formed in this manner, when the refractory insulating member 300 is melted by a flame generated from any battery cell 110, the flame, gas, or high-temperature particles may be discharged to the outside through the refractory coating non-application portion 330.

For this purpose, the refractory coating non-application portion 330 may be formed to correspond to the first venting hole 211. The refractory coating non-application portion 330 may be communicated with the first venting hole 211. For this purpose, the refractory coating non-application portion 330 may be formed to have various shapes or sizes.

To explain this again, when a flame occurs in the battery cell 110, the battery cell 110 is protected by the refractory insulating member 300. However, if the temperature of the flame rises above a preset temperature, the refractory insulating member 300 eventually burns or melts.

At this time, the refractory coating layer coupled to the refractory insulating member 300 secondarily protects the battery cell 110 from the flame. However, the refractory coating non-application portion 330, where the refractory coating layer is not formed, is burned or melted by the flame, and a hole is formed in that region. Also, the flame, gas, or high-temperature particles move through the hole formed by the melting or burning of the refractory coating non-application portion 330.

Here, if the refractory coating non-application portion 330 is communicated with the first venting hole 211 and the first venting hole 211 is communicated with the second venting hole 410, the flame, gas or high-temperature particles generated from any battery cell 110 may be discharged to the outside through the hole formed in the refractory coating non-application portion 330, the first venting hole 211, and the second venting hole 410. Accordingly, the flame, gas or high-temperature particles may be discharged in a preset direction, instead of being propagated to other battery cells 110 that are arranged nearby.

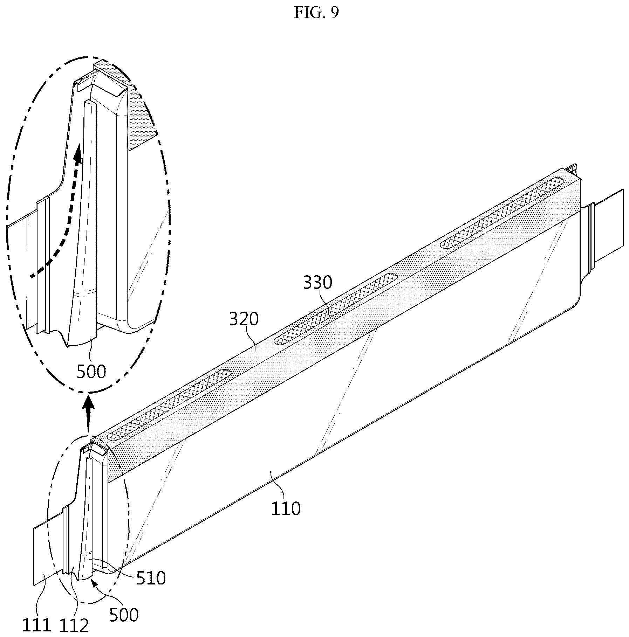

Here, a battery pack 20 (see FIG. 9), explained later, may include a pack case 21, and the pack case 21 may include an upper pack case 22. A space may be formed between the upper pack case 22 and the upper module case 210.

In addition, as described above, the flame, gas or high-temperature particles generated from any battery cell 110 may be discharged to the outside through the hole formed in the refractory coating non-application portion 330, the first venting hole 211 and the second venting hole 410, and then discharged in a preset direction through the space between the upper pack case 22 and the upper module case 210.

Accordingly, the battery module 10 according to an embodiment of the present disclosure not only prevents flame, gas or high-temperature particles generated from one battery cell 110 from propagating to another neighboring battery cell 110 or another battery module 10, but also has the effect of enabling directional venting that may discharge flame, gas or high-temperature particles in a preset direction (a direction intended by the designer).

In addition, the present disclosure has the effect of preventing the thermal runaway phenomenon by preventing the chain reaction of flame due to flame propagation.

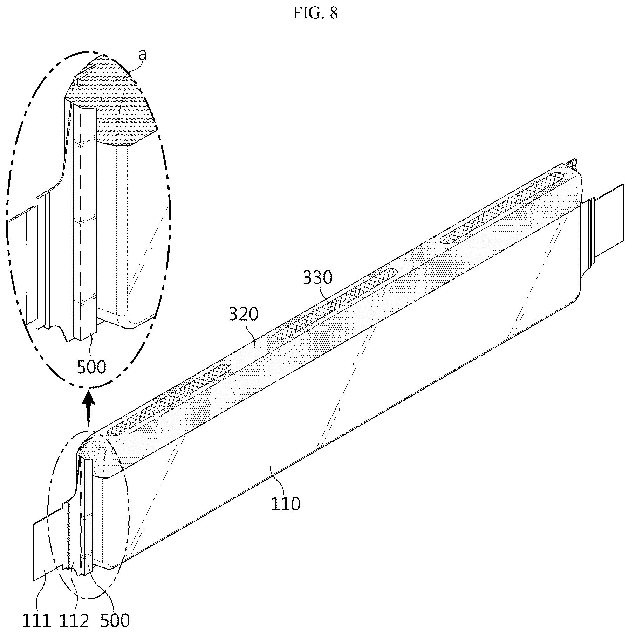

FIG. 7 is a drawing illustrating a modified embodiment of the battery module according to an embodiment of the present disclosure, FIG. 8 is a drawing illustrating a modified embodiment of the battery module according to an embodiment of the present disclosure, and FIG. 9 is a drawing illustrating another modified embodiment of a battery module according to an embodiment of the present disclosure.

Features of the former embodiment, which are applicable to the modified embodiment, are also applied to the modified embodiment, and thus will not be described in detail again. In addition, features of in this modified embodiment, which are applicable to the former embodiment, may also be applied to the former embodiment.

Referring to FIG. 7, the battery cell 110 may have a terrace portion 112 serving as a region where the electrode lead 111 is located. In addition, a gas inflow prevention member 500 may be coupled to the terrace portion 112.

In this way, when the gas inflow prevention member 500 is coupled to the terrace portion 112 of the battery cell 110, gas outside the battery cell 110 may be prevented from flowing into the battery cell 110.

For example, if a thermal event occurs in any battery cell 110, flame, gas, or high-temperature particles may flow into the battery cell 110 through the terrace portion 112 of the battery cell 110 where the thermal event did not occur.

However, if the gas inflow prevention member 500 is coupled to the terrace portion 112 of the battery cell 110, flame, gas, or high-temperature particles may be prevented from flowing into the battery cell 110.

The gas inflow prevention member 500 may be formed in various shapes, for example, in a rectangular plate shape as in FIG. 7, but the shape is not limited thereto.

Also, the gas inflow prevention member 500 may be made of various materials, for example silicone (Si) or polyurethane (PU), but is not limited thereto.

If the gas inflow prevention member 500 is made of silicone or polyurethane, the present disclosure has the effect of reducing heat conduction from flame, gas, or high-temperature particles in the outside.

Referring to FIG. 8, the refractory insulating member 300 may be coupled to a corner (see a of FIG. 8) of the battery cell 110 and connected to the gas inflow prevention member 500, thereby more reliably preventing gas inflow.

Referring to FIG. 8, the refractory insulating member 300 is extended to cover a corner portion of the battery cell 110, but in a modified embodiment, the gas inflow prevention member 500 may be extended to cover the corner portion of the battery cell 110.

Referring to FIG. 9, the gas inflow prevention member 500 may include a curved portion 510 formed in a curved surface shape to guide gas so that the gas flows upward. That is, flame, gas, or high-temperature particles in the outside may collide with the curved portion 510 of the gas inflow prevention member 500 and move upward, and may be discharged to the outside of the module case 200 through the first venting hole 211 of the upper module case 210 and the second venting hole 410 of the mica cover 400.

Meanwhile, even in the case of FIG. 9, the refractory insulating member 300 may be coupled to the corner (a portion corresponding to the part a of FIG. 8) of the battery cell 110 and connected to the gas inflow prevention member 500.

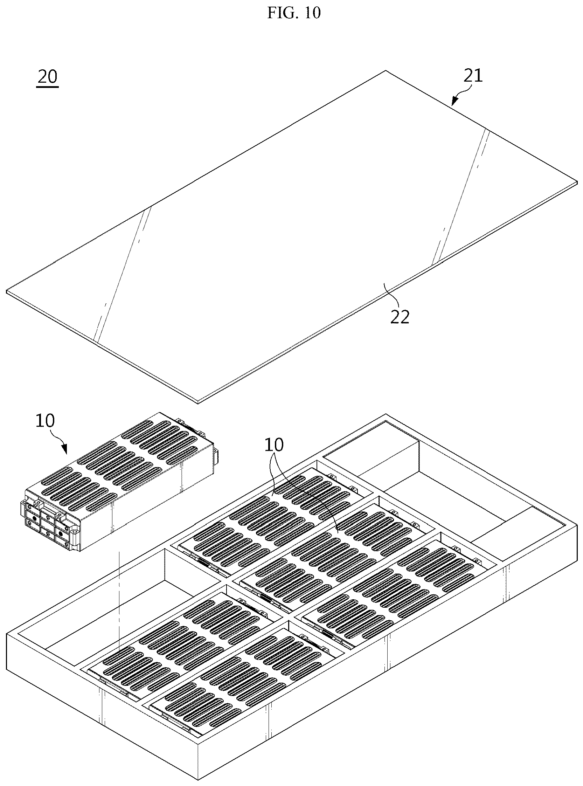

FIG. 10 is a drawing schematically showing the configuration of a battery pack including the battery module according to each embodiment of the present disclosure.

Referring to FIG. 10, a battery pack 20 according to an embodiment of the present disclosure may include one or more battery modules 10 according to each embodiment of the present disclosure described above.

In addition, the battery pack 20 may further include a pack case 21 for accommodating the battery module 10, and various devices for controlling charging and discharging of the battery cell 110 included in the battery module 10, such as a BMS, a current sensor, and a fuse.

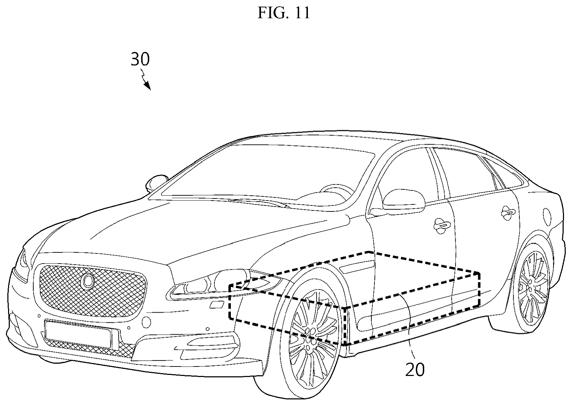

FIG. 11 is a drawing for explaining a vehicle including the battery pack of FIG. 10.

Referring to FIG. 11, a vehicle 30 according to an embodiment of the present disclosure may include one or more battery modules 10 according to each embodiment of the present disclosure or one or more battery packs 20 according to each embodiment of the present disclosure. Here, the battery pack 20 may include one or more battery modules 10 according to each embodiment of the present disclosure.

Here, the vehicle 30 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including the same, and is particularly applicable to industries related to secondary batteries.

## Claims

1. A battery module comprising:
a battery cell stack in which a plurality of battery cells having electrode leads are stacked;
a module case in which the battery cell stack is accommodated; and
a refractory insulating member configured to surround the battery cell.

2. The battery module according to claim 1,
wherein the refractory insulating member is made of a refractory film.

3. The battery module according to claim 1,
wherein the refractory insulating member surrounds an upper side of the battery cell.

4. The battery module according to claim 1,
wherein a refractory coating layer is formed on the refractory insulating member.

5. The battery module according to claim 1,
wherein the refractory insulating member is made of a material containing silicone or aramid.

6. The battery module according to claim 1,
wherein the module case includes an upper module case, and
wherein the upper module case has a first venting hole formed therein to discharge flame, gas or high-temperature particles.

7. The battery module according to claim 6,
wherein the refractory insulating member includes:
a refractory coating application portion on which a refractory coating layer is formed; and
a refractory coating non-application portion on which the refractory coating layer is not applied.

8. The battery module according to claim 7,
wherein the refractory coating non-application portion is formed to correspond to the first venting hole.

9. The battery module according to claim 8,
wherein the refractory coating non-application portion is formed to communicate with the first venting hole.

10. The battery module according to claim 6,
wherein the upper module case is coupled to a flexible mica cover in which a second venting hole is formed.

11. The battery module according to claim 1,
wherein the battery cell has a terrace portion in which the electrode leads are located, and
wherein the battery module comprises a gas inflow prevention member that is coupled to the terrace portion to prevent gas outside the battery cell from flowing into the battery cell.

12. The battery module according to claim 11,
wherein the gas inflow prevention member has a curved portion formed in a curved surface shape to guide gas so that the gas flows upward.

13. The battery module according to claim 11,
wherein the gas inflow prevention member is made of silicone (Si) or polyurethane (PU).

14. A battery pack comprising the battery module according to any one of claims 1 to 13.

15. A vehicle comprising the battery module according to any one of claims 1 to 13.
